# EUROPEAN PATENT SPECIFICATION

(11) **EP 4 134 342 B1**
(45) Date of publication and mention of the grant of the patent: **24.04.2024**
(21) Application number: 21382754.6
(22) Date of filing: 09.08.2021
(51) Int. Cl.: B65G 49/06

(54) **SYSTEM FOR SEPARATING SHEETS OF GLASS IN THE DE-STACKING PROCESS**
VORRICHTUNG ZUM TRENNEN VON GLASSCHEIBEN WÄHREND DES ENTSTAPELUNGSVERFAHRENS
SYSTÈME DE SÉPARATION DE FEUILLES DE VERRE LORS DU PROCESSUS DE DÉSEMPILAGE

(43) Date of publication of application: 15.02.2023
(73) Proprietor: Tur & Development SL, 44415 Teruel (ES)
(72) Inventor: Tomás Martin, Miguel, 44415 Rubielos De Mora Teruel (ES)
(74) Representative: Nederlandsch Octrooibureau

(56) References cited:
- EP-A2- 0 982 251
- DE-B- 1 266 230
- JP-B2- 3 175 007

## Description

### SUBJECT MATTER OF THE INVENTION

The present invention relates to a system and method for the correct separation of glass sheets in the de-stacking process which achieves the separation of the sheets one at a time by arching the sheet to be de-stacked, thereby preventing the second sheet from being dragged by the first sheet.

### BACKGROUND OF THE INVENTION

Glass plates are usually stacked one against the other in packs. When trying to destack a glass plate stored on a rack with glass plate packs comprising several glass plates piled together, there is a risk that, when the first glass plate is picked up, the adjacent glass plate stored forming part of the same pack may be dragged by the first glass plate. This is because the glass plates may be stuck together due to humidity or other factors, or because there is simply no air between the glass plates and they do not separate. Thus, a glass plate stored in this way tends to adhere to adjacent glass plates.

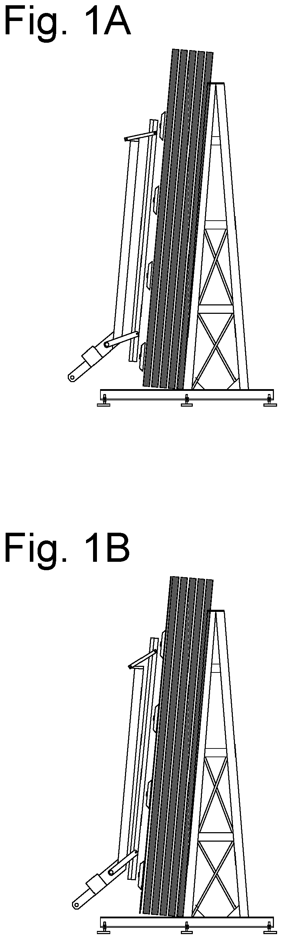

Current de-stacking systems are based on vertical dragging the first glass plate so that it slides over the next one and in this way only the sheet to be de-stacked is lifted. In this way, when the glass plate is lifted, the glass plate starts separating from the adjacent one at the lower part of the glass plate. An example of such a system is shown in figures 1A-1B.

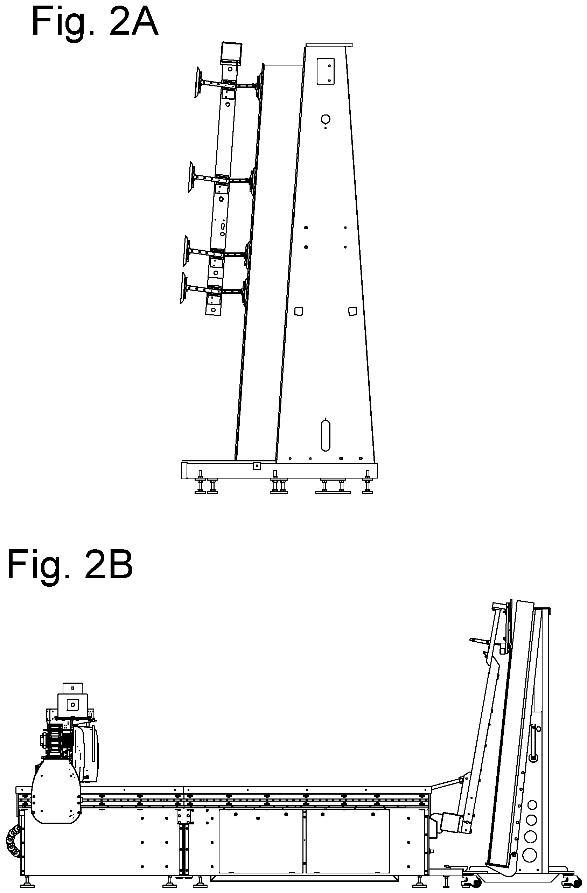

Other systems try to bend the corners of the glass plate to be de-stacked backwards so that air starts to enter between the first and the next glass plate. This is achieved by pulling the corners of the glass plate with suction cups, while other systems on the inside of the glass plate do not pull. An example of such a system is shown in figure 2A-2B. In fig. 2A, the glass plate is shifted in an upwards by the arm with the lowest suction cups while the highest suction cup pulls from a corner of the glass plate in order to bend said corner. Normally, pneumatic cylinders are used to pull the suction cup backwards. The suction cups for gripping the glass are given a few centimeters of free travel so that when the suction cup grid pushes against the glass plate pack, it is ensured that all suction cups touch the glass plate surface. A spring is usually placed so that the suction cups are in the forward position. When the suction cups touch the glass plate, the spring contracts. This travel can be a few centimeters. After vacuuming, this free travel can be used to pull or push the suction cup with a cylinder. In this way, some suction cups can be locked in the forward position and others can be pulled backwards.

It is also common to use so-called "bellows" suction cups as extra suction cups apart of the previously described ones. This kind of suction cups touch the glass plate at the same time than the main suction cups of the machine, but as they have more travel when the vacuum is created, the gripped glass plate does not touch against the suction cup base and therefore the suction cup is forced backwards.

These suction cups are usually placed strategically to try to coincide with the upper corners of the glass plate of the different possible commercial sizes.

In this way, air can enter between the first glass plate in the pile and the next one thereby causing those glass plates to separate. In fig. 2A, the loading system with suction cups pushes the corner of the glass plate

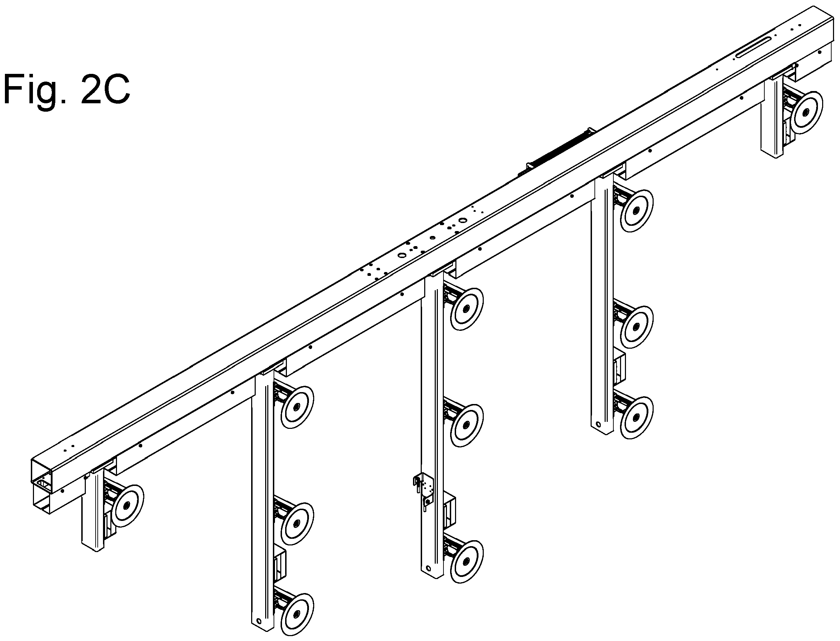

Fig. 2C shows a known example of an aerial glass plate loader comprising arms with suction cups.

JP3175007B2 discloses displacement generation mechanisms that form part of a turning arm and enable suction pads to abut the surface of a plate glass mounted on a standing placement stand. The displacement of the turn arm is controlled by a rotary shaft supported at the end of a moving base.

### DESCRIPTION OF THE INVENTION

In order to simplify the mechanical system necessary for the separation of the glass plates and to increase the reliability of the de-stacking process, the glass plate to be de-stacked is curved so that the suction cups on each arm follow an arc-shaped alignment.

The system is able to change the alignment of the suction cups so that in the rest position the suction cup plates form the same plane. This is necessary so that when the suction cups approach the glass and come into contact with it, they do so all at the same time and can produce a vacuum to pick it up.

Once the suction cups have gripped the glass plates, the arms or grill that support them are moved back a small distance and the plane formed by the suction cups is arched so that the suction cups are arranged in an arc. This achieves two things: the centre of the glass plate to be de-stacked pushes the rest of the glass plates in the pack towards the ridge and air enters from the sides of the glass plate so that it separates correctly. When the glass plate has been separated, the system re-arranges the suction cups to form a plane.

This system brings reliability to the process and reduces the complexity of the mechanism necessary for the auxiliary vertical sliding movement of the glass plate to be separated.

### BRIEF DESCRIPTION OF THE DRAWINGS

Figure 3 shows a flexible support plate and suction cups according to an embodiment of the invention.
Figures 4A-4F show an embodiment of a loading apparatus according to the invention.
Figures 4G shows another embodiment of a loading apparatus according to the invention.
Figure 6 shows a tilting arm 600 comprising the loading apparatus 400 shown in figs. 4A-4F or 4G.
Figure 7 shows a loading system comprising five of the tilting arms shown in fig. 6.
Figures 8A-8C show a table for processing glass plates comprising the loading system shown in fig. 7.
Figures 9A-9D show the table for processing glass plates of figs. 8A-8C.
Figure 10 shows the loading apparatus 400 of figs. 4A-4F or 4G mounted in an aerial loader 1000.

### DESCRIPTION OF THE PREFERRED EMBODIMENT

The same reference signs are used in the different figures to indicate the same elements.

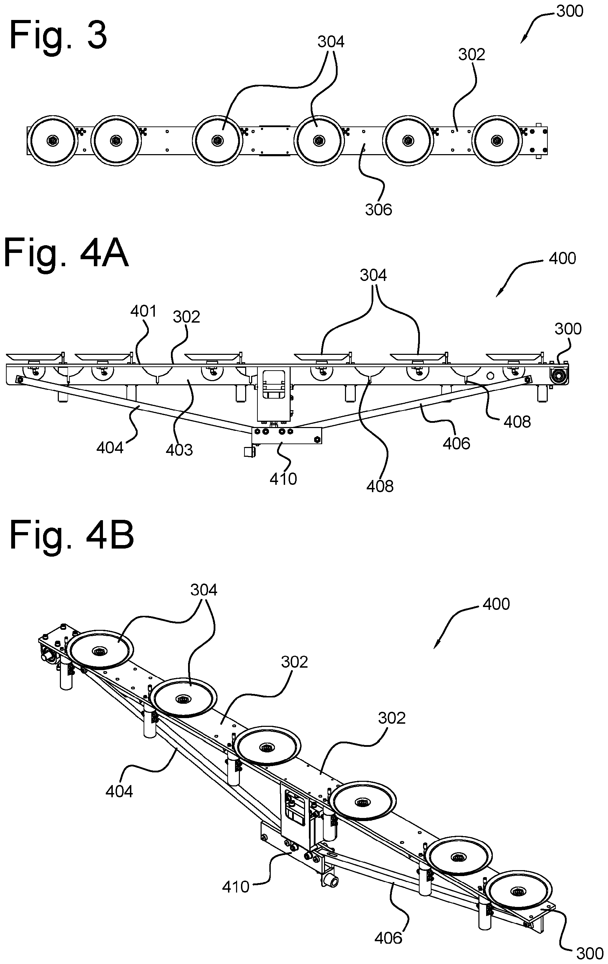

Fig. 3 shows a loading apparatus comprising a flexible support plate 302 and a plurality of suction cups 304. The loading apparatus 300 comprises six suction cups 304 arranged on a first surface 306 of the flexible support plate 302. The flexible support plate 302 may be made of a metal, such as for instance steel. However, the flexible support plate 302 may be made of any other suitable material, such as for instance aluminum.

In a resting position, the firs surface 306 of the flexible support plate 302 extends forming one plane such that each of the six suction cups 304 is aligned with respect to the rest of the suction cups 304. The flexible support plate 302 comprises further actuating means (not shown in fig. 3) arranged to exert a force on the first surface 306 of the flexible support plate such that the surface 306 moves between a substantially flat position (resting position) wherein the plurality of suction cups are substantially aligned with respect to each other and a curved position (active position) wherein at least one of the plurality of suction cups is misaligned with respect to the other suction cups of the plurality of suction cups. In this way, when approaching a glass plate with the loading apparatus 300 of fig. 3, the flexible support plate is in the resting position such that the six suction cups can enter into contact with the surface of the glass plate at the same time allowing that the six suction cups can simultaneously vacuum thereby adhering to the surface of the glass plate. When the suction cups are attached to the surface of the glass plate, the actuating means force the flexible support plate into the active position by bending it such that at least one of the suction cups are not aligned with the rest of the suction cups. In this way, the force exerted on the glass plates by the suction cups is not anymore uniform thereby allowing separation of the glass plate when packed with other glass plates without dragging the following glass plate in the pile.

Figs. 4A-4F show a loading apparatus 400 according to an embodiment of the invention. The loading apparatus 400 comprises the flexible support plate 302 and the suction cups 304 on the first surface 306 shown in fig. 3. The flexible support plate 302 comprises a second surface 401 extending parallel to the first surface 306 and facing a direction opposite to the direction faced by the first surface 306. The first surface 306 and the second surface 401 of the flexible support plate 302 define the thickness of the flexible support plate 302. The flexible support plate 302 may have suitable thickness that allows the flexible support plate 302 to curve. For instance, the flexible support plate 302 may have a thickness of one centimeter. The loading apparatus 400 of figs.4A-F comprises further a body 403 attached at the second surface 401 of the flexible support plate 302. The body 403 comprises five slits 408 formed in the outside of the body 403 and extending towards the flexible support plate 302. However, the body 403 may comprise any suitable number of slits.

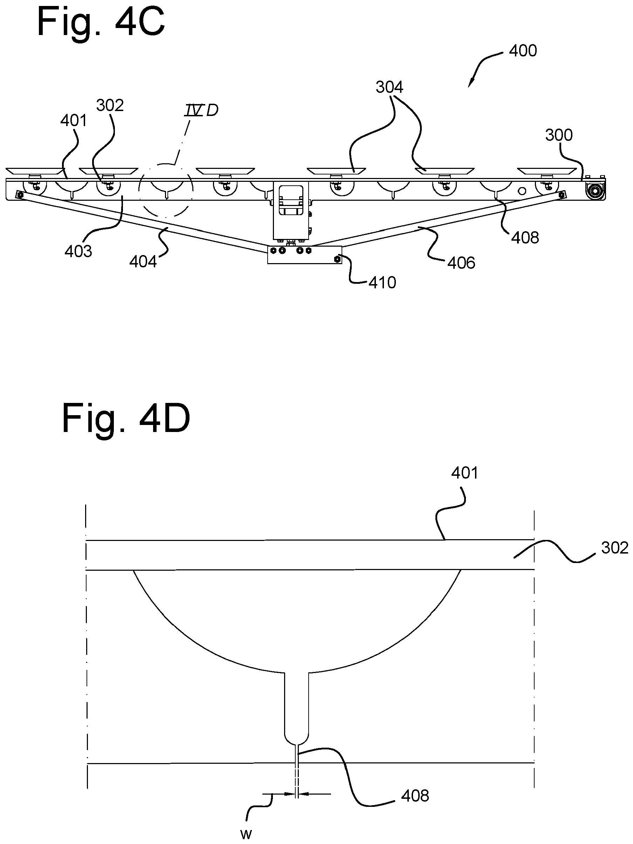

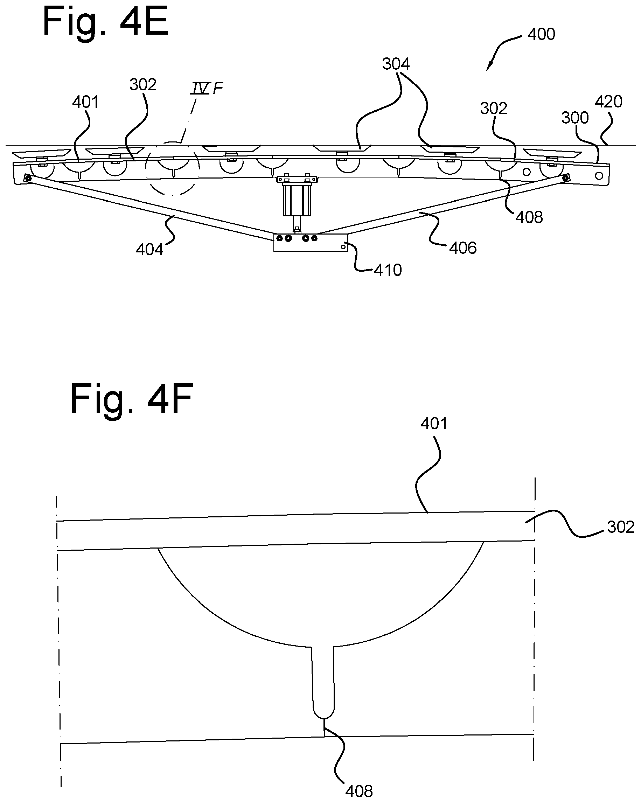

Each of the five slits may have a different width. However, all the slits of the body 403 may have the same width. The width of the slit controls the bending of the parts adjacent to the slit. In this way, by providing slits with different widths, the curvature of the whole flexible support plate can be controlled. Fig. 4C shows the loading apparatus 400 in a resting position wherein the flexible support plate 302 is not bent. Fig. 4D shows a detailed view of a part A of fig. 4C wherein one of the five slits 408 can be appreciated in detail. The slit 408 of fig. 4D comprises a width w. Fig. 4E shows the loading apparatus 400 in a bent position wherein the suction cups 304 are not anymore in line with a plane 420. Fig. 4F shows a detailed view of a part A of fig. 4E. As it can be appreciated in fig. 4F, the width of the slit 408 has been reduced due to the bending of the flexible support plate 302 such that both sides of the slit 408 are in contact with each other. The loading apparatus 400 comprises also a first arm 406 and a second arm 404. One end of the first arm 406 is attached at a first end of the body 403. The other end of the first arm 406 is connected to the actuating means 410. One end of the second arm 404 is connected at a second end of the body 403. The other end of the second arm 404 is connected to the actuating means 410. In this way, when the actuating means are activated, a pulling force is exerted on the first and the second arms such that the first arm pulls from the first end of the body and the second arm pulls from the second end of the body thereby bending the flexible support plate such into a convex shape. When the suction cups are adhered to a glass plate, this causes the suction cups on the ends of the body to exert a greater pulling force than the suction cups in the middle section of the body. In this way, a glass plate piled against other glass plate can be separated and loaded.

Instead of comprising the slits 408, any other way of limiting or conditioning the way on which the flexible support plate 302 is bent can be used. I.e., there may be any kind of mechanical stopper means that limit or condition the way in which the plate is bent. It could be, for example, a welded or screwed piece that butts up against another piece. It could be a screw which, depending on how tightly is screwed in, can make a gap larger or smaller, thereby conditioning the bending of the flexible support plate 302. The flexible support plate 302 may be attached to a first side of at least one body comprising mechanical stopper means arranged to limit or control the bending of the flexible support plate 302. In the previous figs. 4A-F, the mechanical stopper means comprises a slit 408. However, the mechanical stopper means may comprise any suitable physical structure such as, for instance, a piece welded at a certain part of the body to which the flexible support plate 302 is attached.

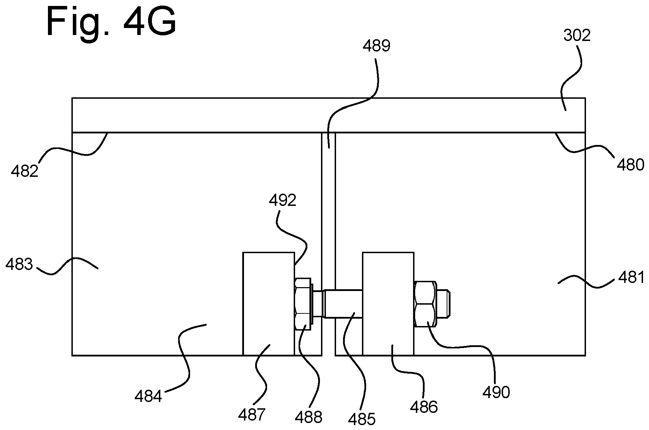

Fig. 4G shows an alternative embodiment comprising alternative mechanical stopper means to limit or control the bending of the flexible support plate 302. The flexible support plate 302 is attached to a first side 480 of a first body 481 and to a second side 482 of a second body 483. The fist body 481 and the second body 483 are separated by a recess 489. The first body 481 and the second body 483 comprise mechanical stopper means 484 arranged to limit or control the bending of the flexible support plate 302. The mechanical stopper means 484 may comprise a first weldment piece 486, a second first weldment piece 487, and a screw 485 which is screwed into the first weldment 486 and wherein the head 488 of the screw 485 butts against the second weldment piece 487. In this way a gap 492 between the screw head 488 and the first weldment piece 486 behaves like the slit 408 of the previous figs. 4A-F. The mechanical stopper means 484 may not comprise the recess 489 such that the flexible support plate 302 may be attached to the surface of only one body as far as the head of the screw can rest against a piece which is solidly attached to the flexible support plate 302 such that, when the flexible support plate 302 is bent, the screw limits the bending depending on how much the screw is screwed in. The mechanical stopper means 484 may further comprise a lock nut 490 to lock the screw. The flexible support plate 302 may be attached to any number of bodies and may comprise any number of mechanical stopper means. By adjusting the lock nut 490, the gap 492 between the screw head and the second weldment piece 487 can also be adjusted thereby controlling the bending of the flexible support plate 302.

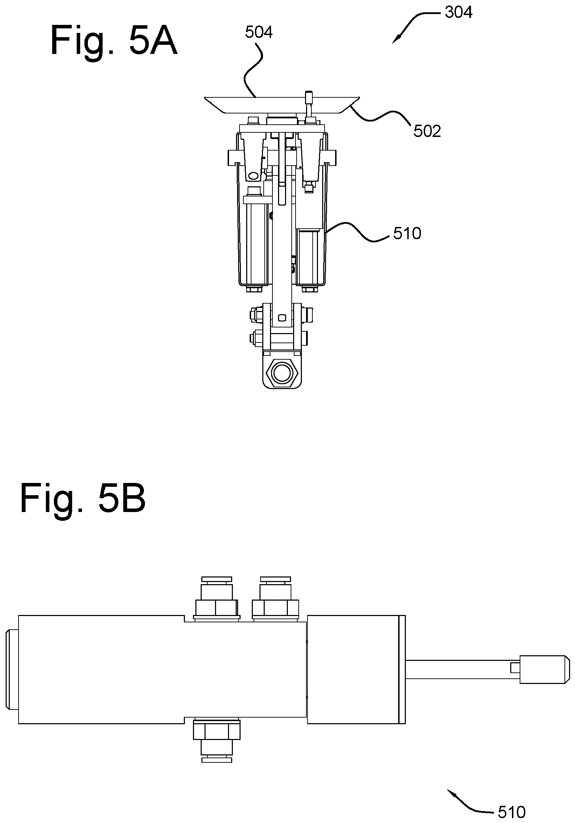

Fig. 5A shows one of the suction cups 304. Each of the suction cups 304 comprises a contact surface 504, a vacuum chamber 502 and a valve 510 that allows to open or close each of the suction cups 304 independently of the rest pf the suction cups. Fig. 5B shows the valve 510 in more detail.

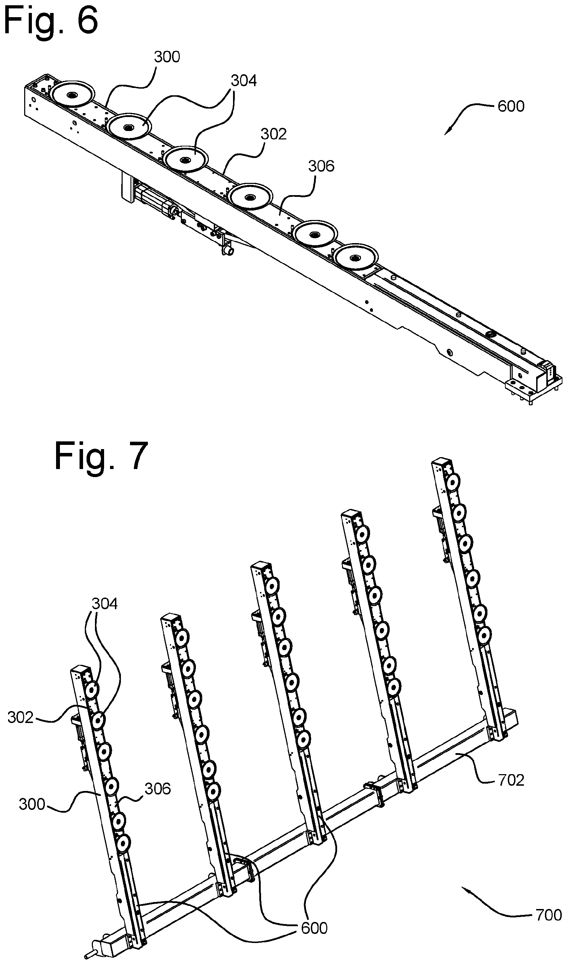

Figure 6 shows a tilting arm 600 comprising the loading apparatus 400 shown in figs. 4A-4F.

Figure 7 shows a loading system 700 comprising five of the tilting arms 600 shown in fig. 6. The loading system 700 of fig. 7 comprises a bar or shaft 702 to which the tilting arms 600 are secured. The tilting arms 600 can be secured to the bar or shaft 702 by screws or any other means. The tilting arms 600 of the loading system 700 are configured to perform a tilting movement with respect to the bar or shaft 702 such that the tilting arms are raised above said bar or shaft. The loading system 700 of fig. 7 may comprise a hydraulic group (not shown in fig. 7). The hydraulic group can actuate the tilting arms 600 of the loading system to make them tilt. The hydraulic group may be located at one of the ends of the loading system. The loading system 700 of fig. 7 may comprises two cylinders arranged respectively at two of the tilting arms 600 to exert a force on these and thereby raise them. Each of the tilting arms 600 of the loading system 700 of fig. 7 comprises six suction cups 304 that will adhere to a glass plate and thereby hold it on the tilting arm 600. Each of the tilting arms may alternatively comprise any number of suction cups. Moreover, the number of suction cups 304 may be different in each tilting arm 600 and may be distributed in the tilting arm in any suitable way. The loading system 700 of fig. 7 may comprise a group (not shown in fig. 7) connected to the suction cups 304 that creates a vacuum in the suction cups 304 when the tilting arms are vertical so that they adhere to the surface of a glass plate and grip it. The tilting arms 600 may alternatively comprise any other system to load and hold the glass plate on the tilting arms.

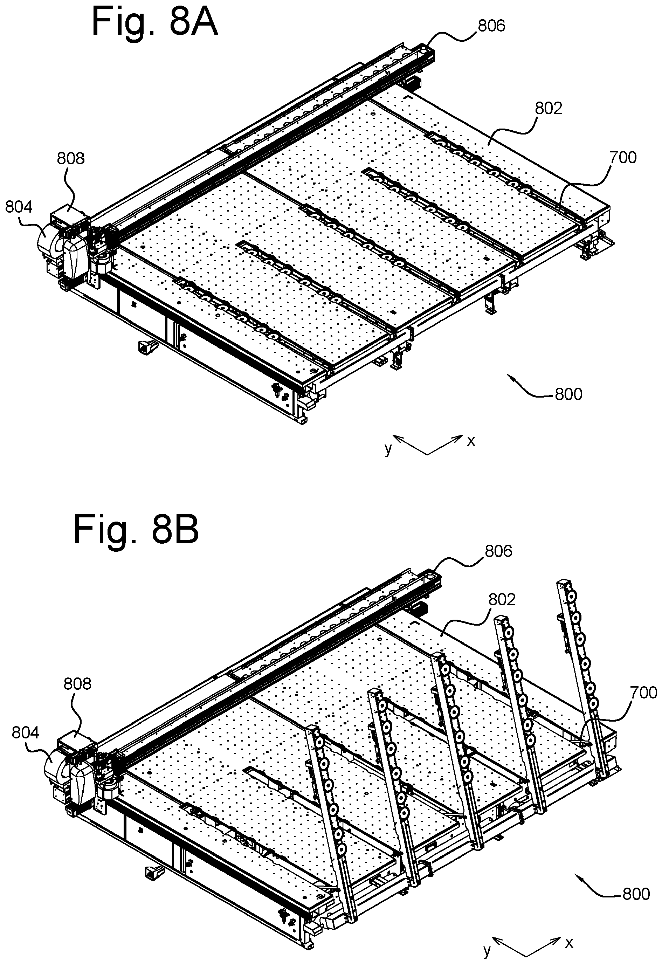

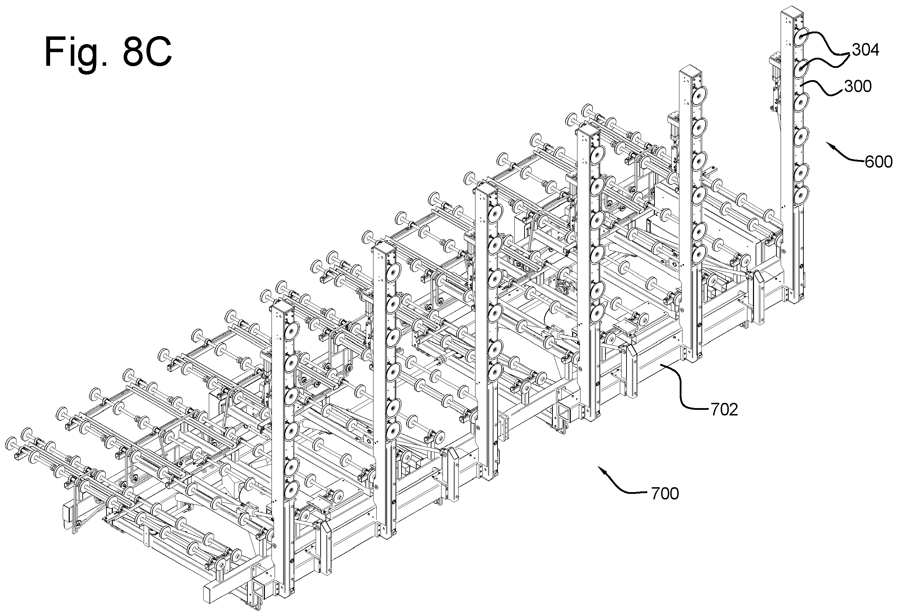

Figures 8A and 8B show a schematic view of a glass processing table comprising the loading system 700 shown in fig. 7. The term table used in the claims and the description is non-limiting and refers to any element that can provide the same functions. Specifically, the term table can refer to any surface that can support glass plates for loading and processing. Figs. 8A-B show a table 800 for loading and processing glass plates that comprises a first pair of opposed side extending in a first direction y and a second pair of opposed sides extending in a second direction x orthogonal to the first direction. The table 800 comprises further a surface 802 for supporting glass plates in a horizontal position. Figure 8C shows a schematic drawing of the loading system 700.

The mobile processing head 808 may comprise a scoring tool, an abrading tool and/or a cutting tool. The mobile processing head 808 may comprise any other kind of tool suitable for glass processing.

The loading system 700 for loading glass plates is able to receive a glass plate from outside the table and deposit the glass plate received in a horizontal position on the surface 802 of the table 800. The loading system 700 comprises five tilting arms 600 wherein the tilting arms 600 are configured to move or tilt between a first position wherein the tilting arms 600 form an angle with the surface 802 of the table 800 and a second position wherein the tilting arms 600 extend parallel to the surface 802 in the first direction y. An external loader (not shown) of glass plates may supply racks comprising packs of glass plates to the glass plate loading system 700. The external loader may be a mobile rack that supplies a glass plate in a vertical or inclined position to the loading system 700 such that the tilting arms 600 receive it when the tilting arms are placed in a vertical position. The tilting arms 600 can be adhered to the glass plate by the suction cups 304. The actuating means can then be activated such to exert a force on the flexible support plate 302 to cause the surface moves from a substantially flat position wherein the plurality of suction cups are substantially aligned with respect to each other to a curved position wherein at least one of the plurality of suction cups is misaligned with respect to the other suction cups of the plurality of suction cups. The glass plate can then be safely loaded on the tilting arms. The tilting arms 600 can therefore tilt with the glass plate to a horizontal position and deposit the glass plate on surface of the table in this horizontal position.

The tilting arms 600 of the loading system 700 of figs. 8A-C may comprise a support (not shown in Figure 1B) that can be used to hold a glass plate on the tilting arms when the tilting arms are in a position forming an angle with the surface 802 of the table. This allows to hold one glass plate on the tilting arms while another glass plate is being processed on the surface of the table. In this way, the loading and processing of glass plates can be partly overlapped thereby saving time. The support may have an elongated shape and may be arranged to protrude from the tilting arm such that, when the tilting arm is the second position wherein the tilting arms 600 extend parallel to the surface 600, the support horizontally extends from the arm. In this way, when the tilting arm is in the first position wherein the tilting arms 600 form an angle with the surface 802, a glass plate can be loaded on the arm such that the support of the arm is against the lowest edge of the glass which extends horizontally parallel to the ground. In this way, the support can hold the glass plate in that position and allow processing of a second glass plate located on the surface of the table. The support may be movably arranged in a cavity on the tilting arm such that can move to a hidden position inside said cavity when not in used.

The table of figs. 8A-8B may further comprise a system (not shown) for evacuating glass plates that evacuates a glass plate out of the table after passing through the processing table. The table of figs. 8A-8B may as well further comprise a transport system for moving a glass plate in the longitudinal direction of the table.

The tilting arms 700 may be arranged to move simultaneously or at different moments. The tilting arms 700 may be arranged in groups such that the tilting arms of a group are arranged to move simultaneously. Furthermore, in an alternative embodiment, the surface of the table of figs. 8A-8B may comprise a first area and a second area wherein the first area may comprise a plurality of first reference positions (not shown). The second area may comprise a plurality of second reference positions (not shown).

The loading system may be arranged to receive and place a plurality of glass plates on the surface based on the first reference positions and/or the second reference positions. For instance, the loading system may be arranged to receive and place a first glass plate on the first area using the tilting arms of the first group based on the first reference positions and/or to receive and place a second glass plate on the second area based on the second reference positions. The table may comprise a processing unit and the first and the second reference positions may be programed in the processing unit. In this way, the loading system may identified the first and the second areas. The first area and the second area may be two independent processing areas such that two glasses can be processed at the same time. The upper bridge of the table of figs. 8A-8B may be fixed or movable. The table of figs. 8A-8B may comprise a second upper processing bridge mounted parallel to the upper bridge 806 which can moved backwards and/or forward in the first direction y on the table. Said second upper bridge may comprise a second processing head mounted in a similar way as the processing head 808 is mounted on the upper bridge 806 such that the movement of the second mobile processing head coordinated with the movement of the second upper bridge allow that the second processing head can reach the first and/or the second areas in order to process a glass plate located on the first and/or the second areas. The table may comprise a processing unit and the first and the second reference positions may be programed in the processing unit. In this way, the loading system may identify the first and the second areas.

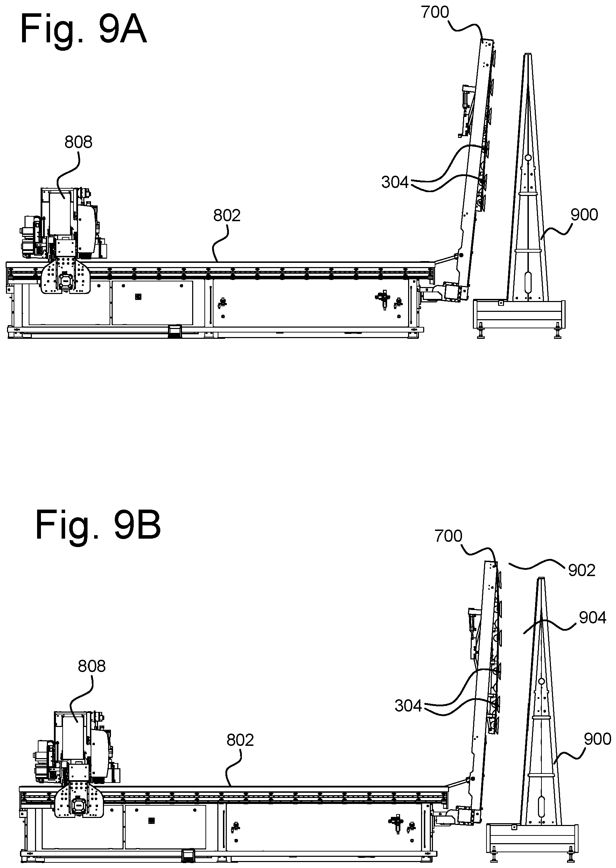

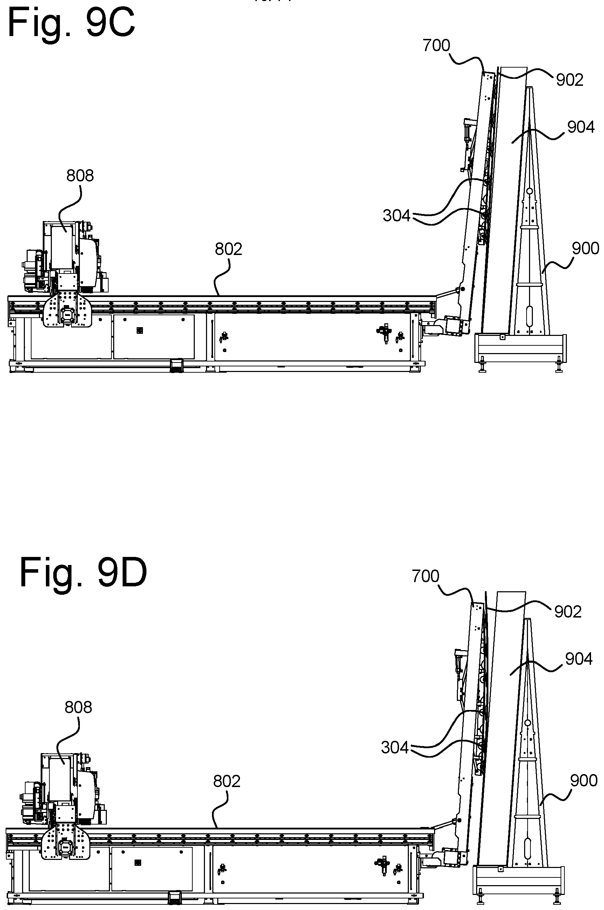

Figures 9A-9D shows the table of figs. 8A-8B in use. Figs. 9A and 9B also show a rack 900 empty. Figs. 9C and 9B show the rack 900 comprising a pack of glass plates 904. The flexible support plate is pivotally mounted on the tilting arm 600.

Fig. 9A shows the loading apparatus 700 wherein the flexible support plate is in a resting position (not bent) and the suction cups 304 are all in the same plane. The flexible support plate hangs and pivots on the upper part of the tilting arm 600.

Fig. 9B shows the loading apparatus 700 wherein the flexible support plate of the tilting arm is in an active position wherein at least one of the plurality of suction cups is misaligned with respect to the other suction cups of the plurality of suction cups. Fig. 9C shows the loading apparatus 700 with the flexible support plate in a resting position. The flexible support plate hangs and pivots on the upper part of the tilting arm 600 such that the six suction cups can enter into contact with the surface of the glass plate 902 at the same time by effect of the gravity force. In this way, the six suction cups can simultaneously vacuum thereby adhering to the surface of the glass plate. When the suction cups are attached to the surface of the glass plate, the actuating means force the flexible support plate into the active position by bending it such that at least one of the suction cups are not aligned with the rest of the suction cups. This is shown in fig. 8D, wherein the force exerted on the glass plates by the suction cups is not anymore uniform thereby allowing separation of the glass plate 902 without dragging the following glass plate in the pile 904.

The loading apparatus 700 may further comprise an inclinometer arranged to detect the angle that the surface of the flexible support plate forms with respect to a plane perpendicular to ground. In this way, when the tilting arms approach the glass plate, the inclinometer measures the inclination of the tilting arm and, when the inclination reaches a predetermined inclination, the tilting arms are controlled to stop tilting and the suction cups start vacuuming. The predetermined inclination is set up to be the same as the inclination of the glass plates waiting to be loaded.

The loading apparatus 700 may also comprise an actuator arranged to exert a force on the plurality of suction cups when the suction cups enter into contact with a surface of the glass plate. Finally, the loading apparatus 700 may comprise a vacuum flow sensor to measure a vacuum flow created by the plurality suction cups when attached to the glass plate. This allows to detect that all the suction cups are hermetically closed.

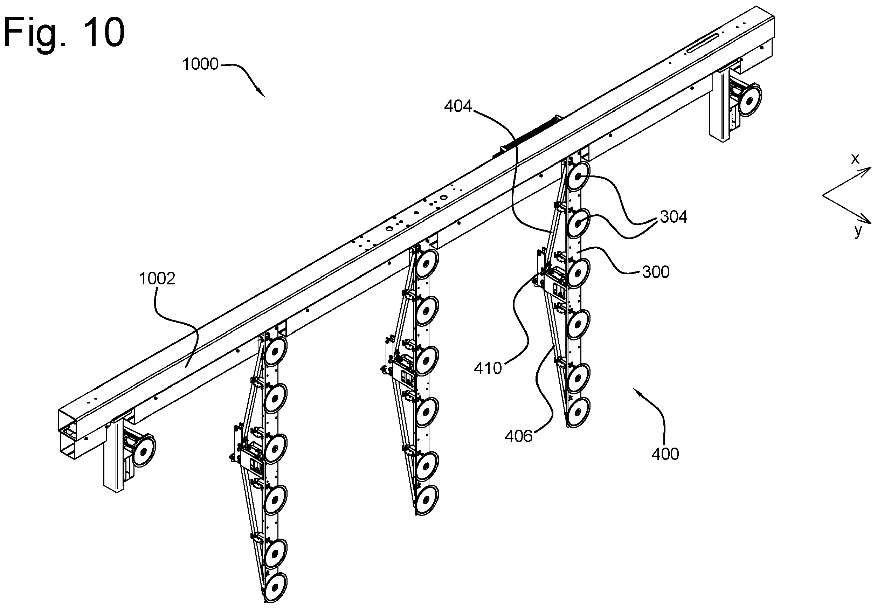

Figure 10 shows the loading apparatus 400 of figs. 4A-4F mounted in an aerial loader 1000. The aerial loader 1000 of fig. 10 comprises a frame 1002 extending parallel to a direction x wherein a plurality of loading apparatus 400 are attached as shown in fig. 10. The frame 1002 can be mounted on two guides parallel to a direction y which is perpendicular to the direction x such that, when the frame 1002 is mounted on the guides, the frame 1002 can move backwards and forwards along the direction y, the loading apparatus 400 hang from the frame and, by the movement of the frame, the loading apparatus 400 can approach a glass plate until the suction cups contact the surface of the glass plate and adhere to it. Then, when the actuating means are activated, a pulling force is exerted on the first and the second arms such that the first arm pulls from the first end of the body and the second arm pulls from the second end of the body thereby bending the flexible support plate such into a convex shape. When the suction cups are adhered to a glass plate, this causes the suction cups on the ends of the body to exert a greater pulling force than the suction cups in the middle section of the body. In this way, a glass plate piled against other glass plate can be separated and loaded

## Claims

1. A loading apparatus (400) for loading a glass plate comprising
a flexible support plate (302);
a plurality of suction cups (304) arranged on a surface of the flexible support plate; and
actuating means (410) arranged to exert a force on the flexible support plate such that the surface moves between a substantially flat position wherein the plurality of suction cups are substantially aligned with respect to each other and a curved position wherein at least one of the plurality of suction cups is misaligned with respect to the other suction cups of the plurality of suction cups.

2. The loading apparatus according to claim 1 further comprising an arm and wherein the flexible support plate is pivotally mounted on the arm.

3. The loading apparatus according to any of the preceding claims comprising a plurality of flexible support plates.

4. The loading apparatus according to claim 2 wherein the arm comprises a tilting point and is arranged to pivot around the tilting point.

5. The loading apparatus according to any of the preceding claims wherein flexible support plate is attached to a first side of at least one body and wherein the at least one body comprises mechanical stopper means arranged to limit or control the bending of the flexible support plate.

6. The loading apparatus according to claim 5 wherein the mechanical stopper means comprises at least one slit on a second side of the body opposed to the first side and wherein the at least one slit is located perpendicular to the longest dimension of the flexible support plate and extends towards the first side of the body.

7. The loading apparatus according to claim 5 wherein the mechanical stopper means comprises at least one piece attached to the at least one body wherein the at least one piece attached to the at least one body is arranged to arranged to limit or control the bending of the flexible support plate.

8. The loading apparatus according to claim 2 wherein the loading apparatus further comprises a glass plate aerial frame wherein the arm is attached to the glass plate aerial frame.

9. The loading apparatus according to any of the preceding claims further comprising a device arranged to open and close at least one of the plurality of the suction cups such that when a glass plate with a size of the largest side smaller than the maximum side size that the suction cups can cover, one or more of the suction cups can be closed.

10. The loading apparatus according to any of the preceding claims further comprising an inclinometer arranged to detect the angle that the surface of the flexible support plate forms with respect to a plane perpendicular to ground.

11. The loading apparatus according to any of the preceding claims further comprising an actuator arranged to exert a force on the plurality of suction cups when the suction cups enter into contact with a surface of the glass plate.

12. The loading apparatus according to any of the preceding claims further comprising a vacuum flow sensor to measure a vacuum flow created by the plurality suction cups when attached to the glass plate.

13. The loading apparatus according to any of the preceding claims wherein the flexible support plate further comprises a first brace arranged to connect the actuating means to an end of the flexible support plate and a second brace arranged to connect the actuating means to another end of the flexible support plate such that force exerted by the actuating means is transferred by the first and the second braces causing the surface to bent.

14. A method to load and/or unload a glass plate with the loading apparatus (420) according to any of claims 1-13.

## Patentansprüche

1. Eine Ladevorrichtung (400) zum Laden einer Glasplatte mit
eine flexible Trägerplatte (302);
eine Vielzahl von Saugnäpfen (304), die auf einer Oberfläche der flexiblen Trägerplatte angeordnet sind; und
Betätigungsmittel (410), die so angeordnet sind, dass sie eine Kraft auf die flexible Trägerplatte ausüben, so dass sich die Oberfläche zwischen einer im Wesentlichen flachen Position, in der die mehreren Saugnäpfe im Wesentlichen zueinander ausgerichtet sind, und einer gekrümmten Position, in der mindestens einer der mehreren Saugnäpfe in Bezug auf die anderen Saugnäpfe der mehreren Saugnäpfe falsch ausgerichtet ist, bewegt.

2. Die Ladevorrichtung nach Anspruch 1, mit einem Arm, wobei die flexible Trägerplatte schwenkbar an dem Arm angebracht ist.

3. Die Ladevorrichtung nach einem der vorhergehenden Ansprüche aufweisend eine Vielzahl von flexiblen Trägerplatten.

4. Die Ladevorrichtung nach Anspruch 2, wobei der Arm einen Kipppunkt aufweist und so angeordnet ist, dass er um den Kipppunkt schwenkt.

5. Die Ladevorrichtung nach einem der vorhergehenden Ansprüche, wobei die flexible Trägerplatte an einer ersten Seite mindestens eines Körpers befestigt ist und wobei der mindestens eine Körper mechanische Anschlagmittel umfasst, die so angeordnet sind, dass sie die Biegung der flexiblen Trägerplatte begrenzen oder steuern.

6. Die Ladevorrichtung nach Anspruch 5, wobei das mechanische Anschlagmittel mindestens einen Schlitz auf einer zweiten Seite des Körpers gegenüber der ersten Seite aufweist und wobei der mindestens eine Schlitz senkrecht zur längsten Abmessung der flexiblen Trägerplatte angeordnet ist und sich in Richtung der ersten Seite des Körpers erstreckt.

7. Die Ladevorrichtung nach Anspruch 5, wobei das mechanische Anschlagmittel mindestens ein Teil umfasst, das an dem mindestens einen Körper befestigt ist, wobei das mindestens eine Teil, das an dem mindestens einen Körper befestigt ist, so angeordnet ist, dass es die Biegung der flexiblen Trägerplatte begrenzt oder kontrolliert.

8. Die Ladevorrichtung nach Anspruch 2, wobei die Ladevorrichtung ferner einen äußeren Glasplattenrahmen umfasst, wobei der Arm an dem äußeren Glasplattenrahmen befestigt ist.

9. Die Ladevorrichtung nach einem der vorangehenden Ansprüche ferner aufweisend eine Vorrichtung, die so beschaffen ist, dass sie mindestens einen der mehreren Saugnäpfe öffnet und schließt, so dass, wenn eine Glasplatte, deren größte Seite kleiner ist als die maximale Seitengröße, die die Saugnäpfe abdecken können, ein oder mehrere der Saugnäpfe geschlossen werden können.

10. Die Ladevorrichtung nach einem der vorhergehenden Ansprüche ferner aufweisend einen Neigungsmesser, der so angeordnet ist, dass er den Winkel erfasst, den die Oberfläche der flexiblen Trägerplatte in Bezug auf eine senkrecht zum Boden verlaufende Ebene bildet.

11. Die Ladevorrichtung nach einem der vorhergehenden Ansprüche ferner aufweisend einen Aktuator, der so angeordnet ist, dass er eine Kraft auf die Vielzahl von Saugnäpfen ausübt, wenn die Saugnäpfe in Kontakt mit einer Oberfläche der Glasplatte kommen.

12. Die Ladevorrichtung nach einem der vorhergehenden Ansprüche ferner aufweisend einen Vakuumstromsensor zur Messung eines Vakuumstroms, der von den mehreren Saugnäpfen erzeugt wird, wenn sie an der Glasplatte angebracht sind.

13. Die Ladevorrichtung nach einem der vorhergehenden Ansprüche, wobei die flexible Trägerplatte ferner eine erste Strebe umfasst, die so angeordnet ist, dass sie das Betätigungsmittel mit einem Ende der flexiblen Trägerplatte verbindet, und eine zweite Strebe, die so angeordnet ist, dass sie das Betätigungsmittel mit einem anderen Ende der flexiblen Trägerplatte verbindet, so dass die durch das Betätigungsmittel ausgeübte Kraft durch die erste und die zweite Strebe übertragen wird, wodurch die Oberfläche gebogen wird.

14. Verfahren zum Laden und/oder Entladen einer Glasplatte mit der Ladevorrichtung nach einem der Ansprüche 1-13.

## Revendications

1. Appareil de chargement (400) pour charger une plaque de verre comprenant :
une plaque de support flexible (302) ;
une pluralité de ventouses (304) disposées sur une surface de la plaque de support flexible ; et
des moyens d'actionnement (410) agencés pour exercer une force sur la plaque de support flexible de sorte que la surface se déplace entre une position sensiblement plate où la pluralité de ventouses sont sensiblement alignées les unes par rapport aux autres et une position incurvée où au moins l'une de la pluralité de ventouses est mal alignée par rapport aux autres ventouses de la pluralité de ventouses.

2. Appareil de chargement selon la revendication 1 comprenant en outre un bras et où la plaque de support flexible est montée de façon pivotante sur le bras.

3. Appareil de chargement selon l'une quelconque des revendications précédentes comprenant une pluralité de plaques de support flexibles.

4. Appareil de chargement selon la revendication 2, où le bras comprend un point d'inclinaison et est agencé pour pivoter autour du point d'inclinaison.

5. Appareil de chargement selon l'une quelconque des revendications précédentes, où la plaque de support flexible est fixée à un premier côté d'au moins un corps et où l'au moins un corps comprend des moyens de butée mécaniques agencés pour limiter ou contrôler le pliage de la plaque de support flexible.

6. Appareil de chargement selon la revendication 5, où les moyens de butée mécaniques comprennent au moins une fente sur un deuxième côté du corps opposé au premier côté et où l'au moins une fente est située perpendiculaire à la dimension la plus longue de la plaque de support flexible et s'étend vers le premier côté du corps.

7. Appareil de chargement selon la revendication 5, où les moyens de butée mécaniques comprennent au moins une pièce fixée à l'au moins un corps où l'au moins une pièce fixée à l'au moins un corps est agencée pour limiter ou contrôler le pliage de la plaque de support flexible.

8. Appareil de chargement selon la revendication 2, où l'appareil de chargement comprend en outre un cadre aérien de plaque de verre où le bras est fixé au cadre aérien de plaque de verre.

9. Appareil de chargement selon l'une quelconque des revendications précédentes, comprenant en outre un dispositif agencé pour ouvrir et fermer au moins l'une de la pluralité de ventouses de sorte que lorsqu'une plaque de verre avec une taille du plus grand côté inférieure à la taille maximale du côté que les ventouses peuvent couvrir, une ou plusieurs des ventouses peuvent être fermées.

10. Appareil de chargement selon l'une quelconque des revendications précédentes, comprenant en outre un inclinomètre agencé pour détecter l'angle que forme la surface de la plaque de support flexible par rapport à un plan perpendiculaire au sol.

11. Appareil de chargement selon l'une quelconque des revendications précédentes, comprenant en outre un actionneur agencé pour exercer une force sur la pluralité de ventouses lorsque les ventouses entrent en contact avec une surface de la plaque de verre.

12. Appareil de chargement selon l'une quelconque des revendications précédentes, comprenant en outre un capteur de débit de vide pour mesurer un débit de vide créé par la pluralité de ventouses lorsqu'elles sont fixées à la plaque de verre.

13. Appareil de chargement selon l'une quelconque des revendications précédentes, où la plaque de support flexible comprend en outre une première entretoise agencée pour connecter les moyens d'actionnement à une extrémité de la plaque de support flexible et une deuxième entretoise agencée pour connecter les moyens d'actionnement à une autre extrémité de la plaque de support flexible de sorte que la force exercée par les moyens d'actionnement est transférée par la première et deuxième entretoises, amenant la surface à se plier.

14. Procédé pour charger et/ou décharger une plaque de verre avec l'appareil de chargement (420) selon l'une quelconque des revendications 1 à 13.
